# EUROPEAN PATENT SPECIFICATION

(11) **EP 0 795 945 B1**
(45) Date of publication and mention of the grant of the patent: **09.01.2002**
(21) Application number: 97660018.9
(22) Date of filing: 20.02.1997
(51) Int. Cl.: H02H 3/52, H02H 5/10, H02H 3/08

(54) **Protection circuit and method for an electromagnetic interference suppression system**
Schutzschaltung und Verfahren für ein Unterdrückungssystem gegen elektromagnetische Störungen
Circuit et méthode de protection pour un système de suppression d'interférence électromagnétique

(30) Priority: 11.03.1996 FI 961130
(43) Date of publication of application: 17.09.1997
(73) Proprietor: ABB Control OY, 65101 Vaasa (FI)
(72) Inventor: Kiiskinen, Esko, 65380 Vaasa (FI)
(74) Representative: Lipsanen, Jari Seppo Einari

(56) References cited:
- EP-A- 0 684 679
- US-A- 5 319 513
- US-A- 5 383 084

## Description

The present invention relates to a protection circuit according to the preamble of claim 1 for an EMI/RFI suppression system.

The invention also concerns a protection method for an EMI/RFI suppression system.

Nonlinear electrical loads whose input current is non-sinusoidal loading the network, e.g. with a steep-rising current pulse, invoke harmonics of the nominal frequency in the power network. Such consumers are, e.g., miniature fluorescent lamps equipped with an electronic ballast which at the peak of the 50 Hz sinusoidal mains voltage waveform steal from the network a current pulse as narrow as only 1.5 ms. In a modern office environment, the entire environment may consist of similar low-quality loads: computers, copiers, printers and air-conditioning systems equipped with electronic fan speed controllers. The dominating harmonic current component caused by such loads, the third harmonic, will be summed almost arithmetically onto the neutral conductor of the network. In practice, current peaks almost double the phase leg current have been recorded on the neutral conductor. As the neutral conductor has no overload protection, a potential hazard is involved under high-load conditions. Moreover, the third harmonic has been found to cause disturbance in data-processing equipment and communications facilities.

Conventionally, the disturbance problem has been overcome by connecting between the load grounding point and the star point of the main transformer a bandstop filter tuned to the third harmonic of the mains frequency.

This arrangement involves a problem if, e.g., in a five-conductor system the protective-earth-grounded equipment housing is incorrectly connected to the neutral conductor, that is, a prohibited grounding connection is made in equipment wiring. Here, as the neutral connector is practically isolated from ground for the third harmonic due to the tuned filter, the disturbing current component at this harmonic is reflected back to the point of incorrect connection, thereby causing a hazard situation.

Networks may be provided with earth-fault detection systems which are mandatory, e.g., in medical installations and explosion-hazardous environments. Such systems are conventionally based on either a sum current transformer or a current transformer placed on the protective earth (PE) conductor.. The low-resistance circuit (water piping, conductive building structures) connected in parallel with the PE conductor make the detection of a fault situation very difficult. Due to such reasons, conventional earth-fault detection systems are frequently hampered by false fault alarms.

EP-A-0 684 679 discloses the use of a bandstop-filter between the neutral conductor N and the star point of a transformer.

US-A-5 383 084 discloses a current transformer on the neutral conductor N, the current transformer having connected to its output a filter, passing harmonic current components to a signal processor. The signal processor is able to cut off phase leg conductors when the harmonic component is excessive.

It is an object of the present invention to overcome the drawbacks of the above-described techniques and to provide a novel type of protection circuit and method for an EMI/RFI suppression system.

The goal of the invention is achieved by connecting on the neutral conductor a current transformer having over its secondary connected a bandpass filter circuit complemented with a series-connected relay, which is adapted to short-circuit the filter circuit in a fault condition. Furthermore, the present method is based on using the electrical energy of the fault current for short-circuiting the bandstop filter of the neutral conductor.

More specifically, the protection circuit according to the invention is characterized by what is stated in the characterizing part of claim 1.

Furthermore, the method according to the invention is characterized by what is stated in the characterizing part of claim 3.

The invention offers significant benefits.

The protection circuit according to the invention makes it possible to prevent a hazard situation in a situation of incorrect earthing connection and to eliminate disturbing false alarms. The direct use of the electrical energy provided by the earth fault current for short-circuiting the neutral-conductor bandstop filter offers a very simple concept compared to alternative protection embodiments based on analog and/or digital techniques.

In the following the invention is described in greater detail with the help of exemplifying embodiments by making reference to the appended drawings in which
Figure 1 shows schematically an embodiment of the electrical protection circuit according to the invention; and
Figure 2 shows a detail of the circuit of Fig. 1.

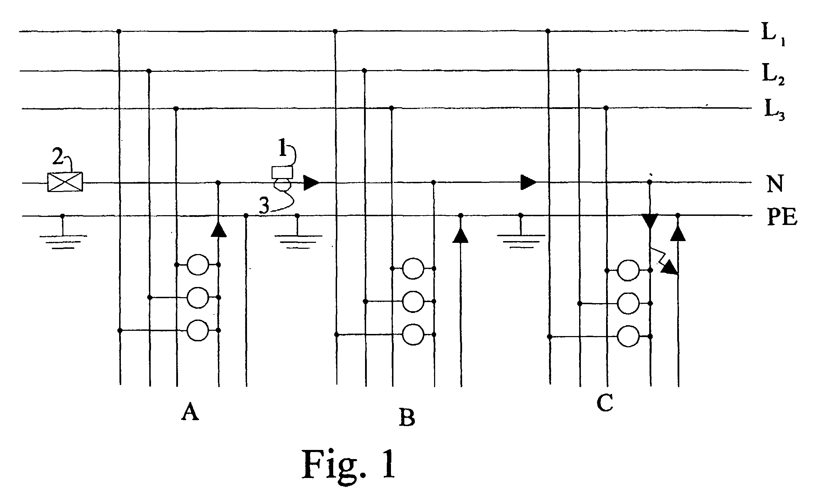

Referring to Fig. 1, the five-conductor system shown therein comprises phase leg conductors L₁, L₂ and L₃ with a neutral conductor N and a protective earth conductor PE. The PE and N conductors may be connected to each other at a single point only, e.g., at the main distribution center. The neutral conductor N is provided with a bandstop filter 2 tuned to the third harmonic of the mains frequency. Herein, a fault connection is shown made close to distribution center C, between the PE and N conductors, whereby the bandstop filter 2 of the neutral conductor will cause the fault current also from the other distribution centers A and B to be directed to this point of ground fault. The reason for this ground fault can be such as the erroneous connection of the protective-earth grounded equipment housing to the neutral conductor N.

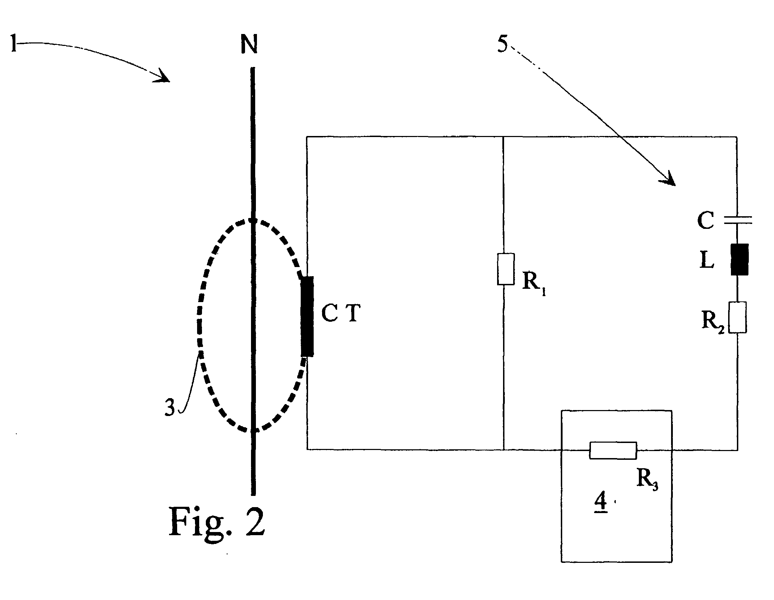

Now referring to Fig. 2, the neutral conductor N is herein shown to form the primary winding by being threaded through the core opening of the magnetic circuit 3 of a current transformer CT. Two branches are connected in parallel with the secondary of the current transformer CT of which one is a purely resistive branch R₁ and the other branch, namely, the filter branch 5 comprises a bandpass filter which is tuned to the third harmonic of the mains frequency and has a relay 4 connected in series therewith. The bandpass filter is realized as a series-connected LC circuit, and due to nonideal components, also this branch has a resistance R₂. The resistance of the relay 4 is drawn as a resistance R₃. When the current in the filter branch 5 reaches a preset upper limit value, the relay 4 short-circuits the EMI/RFI suppression filter 2 and additionally can issue an alarm by means of an auxiliary contact of the relay 4.

Practical design values for the circuit 1 is as follows:
- R₁: 0.5 ohm
- R₂: 60 milliohm
- R₃: 20 milliohm
- C: 265 µF
- L: 4.25 mH

Turns ratio of transformer CT is 50/5.

A circuit having the above-given parameters directs the fundamental 50 Hz current component to pass mainly (by 78 %) through the resistor R₁, while the 150 Hz third harmonic current component is mainly (by 86 %) passed by the filter branch. The relay 4 may be, e.g., a dual contact relay type SJ 155 230 5A by Electromatic Oy. The current adjustment range of this relay is from 1 to 5 A AC and it is operated by a 230 V AC coil voltage. This type of relay 4 has one normally open contact (used for short-circuiting the filter) while the other, normally-closed contact can be used for signalling an alarm circuit. In the illustrated circuit, a 20 A current at the 150 Hz third harmonic in the neutral conductor N can be detected by setting the relay for 1.7 A upper limit current, which may not yet trip the relay. At the fundamental frequency of 50 Hz, a neutral line current of 50 A causes a 1.1 A current to pass through the relay that is insufficient for tripping the relay. Thus, the fault current (third harmonic) passing along the neutral conductor N can be directly used for short-circuiting the filter 2.

Obviously, the invention is suited for filtering out any harmonic overtone of the mains frequency provided that the filter 2 and the filter branch 5 are tuned at the same frequency.

## Claims

1. A protection circuit for an EMI/RFI suppression system (2) of a five-conductor electrical system in which the neutral conductor (N) is provided with a bandstop-type filter circuit (2) for the suppression of a harmonic interference current component, **characterized in that**
- a current transformer (CT) is placed on the neutral conductor (N), having over its secondary a resistive branch (R₁), and in parallel therewith, a filter branch (5) comprising a bandpass filter (LC) tuned to the fundamental frequency of said neutral-conductor filter circuit (2) and said filter branch (5) having in series with said bandpass filter (LC) a switch element (4) suitable for short-circuiting said neutral-conductor filter circuit (2) when the harmonic current component in said filter branch (5) exceeds a preset upper limit level.

2. A protection circuit as defined in claim 1, **characterized in that** said switch element (4) is a dual-contact element for implementing an alarm function.

3. A protection method for an EMI/RFI suppression system (2) of a five-conductor electrical system in which the neutral conductor (N) is provided with a bandstop-type filter circuit (2) for the suppression of a harmonic interference current component, **characterized in that**
- the filter circuit (2) is short-circuited when the harmonic current component exceeds a preset upper limit.

4. A method as defined in claim 3, **characterized in that** electrical energy to the circuit of said short-circuiting element (4) is transferred by means of a current transformer (CT).

5. A method as defined in claim 3, **characterized in that**, besides short-circuiting, the electrical energy of the fault current is used to activate an alarm circuit.

## Patentansprüche

1. Schutzschaltkreis für ein EMI/RFI Unterdrückungssystem (2) eines elektrischen Systems mit 5 Leitern, in der der Nulleiter (N) mit einem Filterschaltkreis vom Bandsperr-Typ (2) zur Unterdrückung einer harmonischen Interferenzstromkomponente versehen ist, und **dadurch gekennzeichnet ist, dass** an dem Nulleiter (N) ein Stromtransformator (CT) angeschlossen ist, der über seine Sekundärwicklung einen Widerstandszweig (R₁) und parallel dazu einen Filterzweig (5) aufweist, der einen Bandpassfilter (LC) aufweist, der auf die Grundfrequenz des Nulleiterfilterschaltkreises (2) abgestimmt ist, und wobei der Filterzweig (5) in Serie mit dem Bandpassfilter (LC) ein Schaltelement (4) aufweist, das geeignet ist, den Nulleiterfilterschaltkreis (2) kurzzuschließen, wenn die harmonische Stromkomponente in dem Filterzweig (5) eine voreingestellte Obergrenze überschreitet.

2. Schutzschaltkreis nach Anspruch 1, **dadurch gekennzeichnet, dass** das Schaltelement (4) ein Doppelkontakt-Schaltelement zur Ausführung einer Alarmfunktion ist.

3. Schutzverfahren für ein EMI/RFI Unterdrückungssystem (2) eines elektrischen Systems mit 5 Leitern, bei dem der Nulleiter (N) mit einem Filterschaltkreis vom Bandsperr - Typ (2) zur Unterdrückung einer harmonischen Störstromkomponenten ausgestattet ist, **dadurch gekennzeichnet, dass**
der Filterschaltkreis (2) kurzgeschlossen wird, wenn die harmonische Stromkomponente eine voreingestellte Obergrenze überschreitet.

4. Verfahren nach Anspruch 3, **dadurch gekennzeichnet, dass** elektrische Energie zu dem Schaltkreis des kurzschließenden Elements (4) (mittels eines Stromtransformators (CT)) übertragen wird.

5. Verfahren nach Anspruch 3, **dadurch gekennzeichnet, dass** neben dem Kurzschließen die elektrische Energie des Fehlerstroms verwendet wird, um einen Alarmschaltkreis zu aktivieren.

## Revendications

1. Circuit de protection pour un système de suppression d'EMI/RFI (parasites/interférences) (2) d'un système électrique à cinq conducteurs dans lequel le conducteur neutre (N) est muni d'un circuit de filtre du type coupe-bande (2) pour la suppression d'une composante de courant d'interférence harmonique, **caractérisé en ce que** :
- un transformateur de courant (CT) est placé sur le conducteur neutre (N), ayant sur son secondaire une branche résistive (R₁), et en parallèle avec cette dernière, une branche de filtre (5) comprenant un filtre passe-bande (LC) accordé sur la fréquence fondamentale dudit circuit de filtre de conducteur neutre (2), et ladite branche de filtre (5) ayant en série avec ledit filtre passe-bande (LC) un élément de commutation (4) approprié pour court-circuiter ledit circuit de filtre de conducteur neutre (2) quand la composante de courant harmonique dans ladite branche de filtre (5) dépasse un niveau de limite supérieure prédéterminé.

2. Circuit de protection selon la revendication 1, **caractérisé en ce que** ledit élément de commutation (4) est un élément de contact double pour mettre en oeuvre une fonction d'alarme.

3. Procédé de protection pour un système de suppression d'EMI/RFI (parasites/interférences) (2) d'un système électrique à cinq conducteurs dans lequel le conducteur neutre (N) est muni d'un circuit de filtre du type coupe-bande (2) pour la suppression d'une composante de courant d'interférence harmonique, **caractérisé en ce que** :
- ledit circuit de filtre (2) est court-circuité quand la composante de courant harmonique dépasse une limite supérieure prédéterminée.

4. Procédé selon la revendication 3, **caractérisé en ce qu'**une énergie électrique vers le circuit dudit élément de court-circuit (4) est transférée au moyen d'un transformateur de courant (CT).

5. Procédé selon la revendication 3, **caractérisé en ce que**, en plus du court-circuit, l'énergie électrique du courant de défaut est utilisée pour activer un circuit d'alarme.
